# DEMANDE DE BREVET EUROPEEN

(11) **EP 1 396 518 A1**
(43) Date de publication de la demande: **10.03.2004**
(21) Numéro de dépôt: 03017490.8
(22) Date de dépôt: 01.08.2003
(51) Int. Cl.: C08J 5/12, B32B 17/10

(54) **Procédé pour améliorer l'adhésion d'une peinture sur une couche intercalaire d'un vitrage feuilleté et applications de ce procédé**

(30) Priorité: 06.09.2002 CH 15212002
(71) Demandeur: VERRES INDUSTRIELS SA., CH-2740 Moutier (CH)
(72) Inventeur: Knuchel, Gerhard, 4537 Wiedlisbach (CH); Casella, Antonio, 2852 Courtetelle (CH); Jelli, André, 2740 Moutier (CH)
(74) Mandataire: Blum, Rudolf Emil Ernst

(57) **Abrégé**

Pour améliorer l'adhésion d'une peinture (3) portée par la face intérieure d'une plaque de verre (1) faisant partie d'un vitrage feuilleté sur une couche intercalaire en résine (2) de ce vitrage, on utilise pour la peinture un plastifiant de la même famille chimique que celui de la couche intercalaire.

## Description

L'utilisation de verres de sécurité feuilletés est largement répandue tant dans le domaine automobile que dans le bâtiment, les constructions ferroviaire, navale et aéronautique, l'industrie des machines, l'ameublement, ainsi que dans bien d'autres secteurs.

La majorité de ces verres sont assemblés à l'aide de films de butyral de polyvinyle (PVB), résine dont les propriétés de transparence, de résilience, d'adhérence au verre et de tenue au vieillissement sont universellement reconnues et permettent de satisfaire les tests sécurité exigés par la plupart des normes, souvent très strictes, relatives aux domaines du bâtiment, de l'automobile et de l'aéronautique par exemple.

L'évolution de la technique a cependant fait apparaître déjà depuis quelques années certaines difficultés jusqu'à présent non résolues. Dans le bâtiment par exemple, il est souvent demandé de garnir les bords des vitrages d'une peinture opaque destinée à protéger les mastics d'étanchéité contre l'agression du rayonnement ultraviolet solaire. Il est également parfois demandé de réaliser des verres portant des motifs décoratifs (publicitaires ou autres) colorés.

Dans l'automobile, la construction ferroviaire, la construction navale et la construction aéronautique la tendance actuelle à développer l'utilisation de vitrages chauffés électriquement impose souvent, du point de vue esthétique, de masquer les collecteurs d'amenée de courant, et ce également à l'aide d'un recouvrement opaque.

Lorsque les verres sont trempés thermiquement, ce recouvrement opaque peut être réalisé à l'aide d'émaux fusibles, dont la vitrification est assurée pendant le processus de trempe. Par contre, lorsque les verres sont renforcés chimiquement ou ne sont pas trempés, on est obligé de recourir à l'utilisation de peintures organiques. Comme en général les revêtements organiques posés sur les faces externes des vitres sont beaucoup plus sensibles aux agressions mécaniques (abrasion, griffures...) et chimiques (corrosion par l'eau, les détergents...) que les émaux vitrifiés, il y a un intérêt majeur de poser ces revêtements sur une des faces internes du vitrage feuilleté. Du point de vue esthétique l'aspect est d'ailleurs nettement plus attractif lorsque le revêtement est déposé sur la face arrière (non accessible) de la vitre.

Dans ces cas, quelle que soit la peinture commercialement disponible, dont la plupart sont actuellement basées sur des formulations acryliques, polyuréthanes et/ou vinyliques, il est relativement aisé de promouvoir l'adhérence de la peinture sur le verre par l'utilisation d'agents d'accrochage ou de primaires adéquats; par contre il s'avère que l'adhérence de ces peintures sur l'intercalaire en PVB est extrêmement faible et très généralement insuffisante pour que le vitrage puisse encore être considéré comme un vitrage de sécurité. Même les peintures à base vinylique, utilisées par exemple dans le revêtement anticorrosif de métaux n'offrent pas une solution satisfaisante à ce problème.

Pour combler cette lacune il était intéressant de rechercher une formulation de peinture qui soit compatible avec le film intercalaire de butyral de polyvinyle utilisé pour la réalisation de vitrages feuilletés et offre une adhérence adéquate à la fois sur le verre et sur le film intercalaire, ce afin que la fonction de vitrage de sécurité soit assurée en cas de bris du ou des verres. Cette fonction est assurée si les morceaux de verre restent fixés sur la feuille intercalaire et ne risquent pas, en s'éjectant, de blesser soit les passagers du véhicule , soit les tiers. La présente invention vise à assurer ce résultat. A cet effet elle est définie comme il est dit à la revendication principale. L'invention sera maintenant illustrée par la description de formes d'exécution et leur comparaison avec des procédés connus. La description est complétée par un dessin, dans lequel:
La figure 1 représente de façon simplifiée une coupe transversale d'un verre feuilleté avec un revêtement opaque intérieur sur une partie de sa surface;
la figure 2 représente une coupe similaire à celle de la figure 1, mais avec des électrodes de chauffage recouvrant partiellement le revêtement opaque.

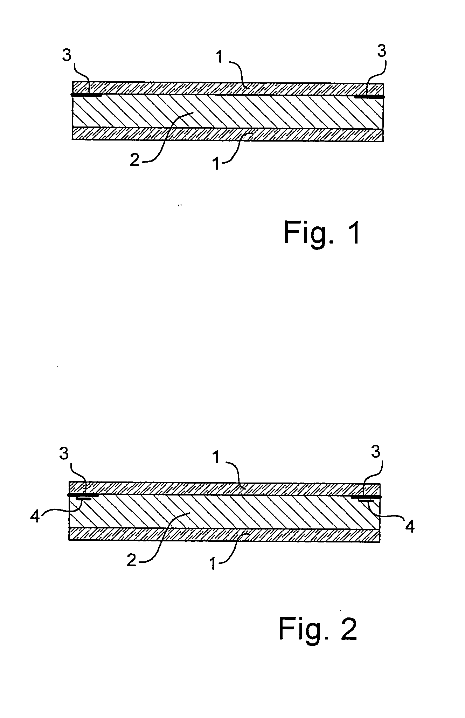

La figure 1 est une coupe schématique à travers un vitrage feuilleté composé de deux plaques de verres 1 et d'une couche intercalaire 2 en PVB. Pour simplifier on a représenté un vitrage feuilleté plan, mais celui-ci peut naturellement avoir une autre forme générale, et en particulier être bombé lorsqu'il est destiné à former par exemple un pare-brise. Un revêtement opaque 3 est placé entre une plaque de verre extérieure 1 et la couche intercalaire 3, près du bord du vitrage. Ce revêtement peut avoir diverses fonctions, soit esthétiques, soit de protection contre les rayonnements solaire, etc. Selon les cas il peut être opaque, translucide ou transparent. Pour être bref il sera néanmoins qualifié de "revêtement opaque" dans ce qui suit parce que cette forme d'exécution est la plus courante, mais étant entendu qu'elle n'exclut pas les revêtements translucides ou transparents.

Si le vitrage feuilleté vient à être brisé il ne se comportera comme un verre de sécurité que si l'adhésion du revêtement opaque tant à la plaque de verre extérieure qu'à la couche intercalaire est suffisante pour retenir sur celle-ci les éclats de verre formés près du bord.

La figure 2 montre de façon analogue une coupe simplifiée à travers un vitrage feuilleté destiné à former un vitrage chauffant, par exemple un pare-brise d'automobile. Les chiffres de référence 1 à 3 sont les mêmes qu'à la figure 1, mais ici des électrodes 4 d'amenée de courant de chauffage sont disposées entre le revêtement opaque 3 et la couche intercalaire 2. Pour les mêmes raisons qu'à la figure 1, il est évident que cet agencement exige une bonne adhérence du revêtement opaque 3 sur l'électrode 4 qui l'avoisine, afin que le vitrage feuilleté forme un verre de sécurité.

Le tableau 1 montre les résultats comparatifs d'essais réalisés avec diverses peintures mais le même film intercalaire. Les résines de base et le plastifiant du film intercalaire sont les mêmes pour tous les essais, à savoir la résine constitutive des films RB et RM de la firme SOLUTIA additionnée de 3GH comme plastifiant. Ils ont été effectués en partie avec des peintures commerciales connues qui sont en général plastifiées de manière interne par modification des polymères de base, et en partie avec des peintures spécialement élaborées selon le procédé de l'invention. Ce tableau montre les résultats d'essais où l'on a déterminé la valeur PUMMEL de l'adhésion entre le revêtement opaque et la couche intercalaire et soumis le vitrage feuilleté à un test de cisaillement provoquant une délamination. Dans tous les cas une bande périphérique de 30 mm de peinture est appliquée par pistolage sur un verre, après la pose d'un primaire d'accrochage. Ce verre est ensuite assemblé à un second verre par l'intermédiaire d'un film intercalaire en PVB. Après passage à l'autoclave, on procède à un test PUMMEL ainsi qu'à un test de cisaillement sur la partie périphérique et dans la zone centrale du vitrage. Les essais 1 à 5 correspondent aux procédés connus précédemment, en particulier, dans l'essai 5, en utilisant une gamme de peintures anticorrosives pour métaux, à savoir basée sur des résines d'acétals de polyvinyle commercialisées par exemple par la firme HOECHST sous la dénomination "Movital".

La constitution des résines de butyral de polyvinyle de base utilisées aussi bien dans l'élaboration des films que dans la préparation des peintures est approximativement la suivante: 60 à 90% de butyral, environ 3% d'acétate et de 15 à 30% d'hydroxyle (alcool). Dans l'usage courant ces résines sont parfois associées à des résines phénoliques ou aminées (urée ou mélamine). Généralement aussi elles sont plastifiées et leur adhérence sur les métaux est améliorée par incorporation dans les compositions de résines polyester insaturées, comme par exemple les résines LTH de la firme HÜLS ou la DESAVIN de BAYER (voir essai no. 5).

Les essais 1 à 4 on été effectués de manière usuelle, avec des peintures obtenues dans le commerce. Dans l'essai 1 on a utilisé une peinture acrylique conventionnelle de carrosserie de voiture. Dans l'essai 2 la peinture utilisée est à base de polyuréthane, dans l'essai 3 elle est basée sur le système alkyde-melamine formol, et dans l'essai 4 c'est une peinture à base de résines polyester. Il n'a malheureusement pas été possible d'identifier le ou les plastifiants éventuellement incorporés dans les peintures du commerce, ayant servi aux essais 1 à 4 mais on n'y a pas décelé de 3GH. Comme il ressort du tableau, les résultats sont équivalents pour tous ces essais, c'est-à-dire que les essais 1 à 4 donnent tous une valeur nulle pour l'adhérence entre la peinture et le PVB et une valeur allant jusqu'à 6 (pour le test PUMMEL) dans la zone centrale non enduite du vitrage. Les valeurs se rapportant à cette zone centrale ne sont pas recensées dans le tableau. La peinture et le PVB adhèrent parfaitement sur le verre, mais l'adhérence entre le PVB et la peinture est nulle, avec des valeurs PUMMEL inférieures à 1.

Dans le cas 5 on a utilisé une peinture, basée sur le butyral de polyvinyle que l'on a plastifiée par la DESAVIN de BAYER. L'essai a été effectué dans les mêmes conditions que les essais précédents et le vitrage soumis aux mêmes tests. Dans ce cas la résine de base est de même nature que celle du film mais le plastifiant utilisé pour la peinture n'est pas de la même famille que le plastifiant incorporé dans le film intercalaire, puisque le DESAVIN est du type Di-(phénoxy-éthyl) formal. On remarque que la valeur PUMMEL ainsi que le test de cisaillement dans la zone périphérique ne sont plus nulles dans ce cas. Il existe donc une certaine adhérence entre la peinture et le PVB mais elle est encore largement insuffisante pour que le vitrage remplisse pleinement son rôle de verre de sécurité.

Dans les essais 6 à 8 effectués selon l'invention on a utilisé pour arriver aux fins souhaitées une peinture à base de résines de butyral polyvinyliques pures, additionnée du plastifiant utilisé dans la composition du film intercalaire du verre feuilleté. En l'occurrence, dans le cas par exemple de l'utilisation pour le feuilletage des films RB ou RM de la firme SOLUTIA, films dans lesquels le plastifiant utilisé est le (bis 2 éthylhexanate) triéthylèneglycol, (en abrégé 3GH) on a ajouté ce composé dans la formulation des peintures et ce dans des proportions comprises entre 5 et 90% par rapport au poids de la résine de base. Aucun autre des constituants généralement introduits dans les compositions des peintures à base de PVB, mis à part le pigment, n'a été ajouté. Dans ces essais les valeurs PUMMEL et de cisaillement sont sensiblement les mêmes pour la zone peinte et la zone non-peinte où la plaque de verre extérieure est en contact direct avec la couche intercalaire.

Dans l'essai 7 le verre feuilleté comporte une électrode d'amenée de courant (par exemple pour le chauffage de la vitre) située entre la couche intercalaire et le revêtement opaque, afin de vérifier si cet agencement donne lieu à des fuites de courant. Etant donné la faible surface de l'électrode, l'adhérence de la peinture sur celle-ci n'est pas essentielle et en outre difficilement mesurable. Elle n'a donc pas été mesurée. Par contre l'ensemble a été soumis à un vieillissement artificiel sous action de rayons ultraviolets et d'humidité. Des tests, non recensés dans le tableau, montrent que le vitrage reste parfaitement opérationnel: il n'y a aucun courant de fuite entre les électrodes et la peinture remplit son rôle de masquage des électrodes. La peinture n'est en outre absolument pas altérée par le passage du courant de chauffe.

Dans l'essai 8 un vitrage entièrement recouvert avec la peinture de l'exemple précédent est soumis à un test d'exposition de 10'000 heures aux rayons ultraviolets en milieu humide. Après ce test les valeurs d'adhérence obtenues sur cet échantillon sont sensiblement identiques à celles relevées sur un échantillon témoin n'ayant pas subi ce vieillissement accéléré. Les propriétés physiques et chimiques de la peinture ne sont donc pas altérées par le rayonnement ultraviolet.

L'ensemble du tableau 1 démontre l'avantage décisif qu'il y a à utiliser pour la peinture non seulement une résine de base de la même famille que celle servant à l'élaboration du film, mais également et surtout un plastifiant de la même famille que - et de préférence identique à - celui de la feuille intercalaire.

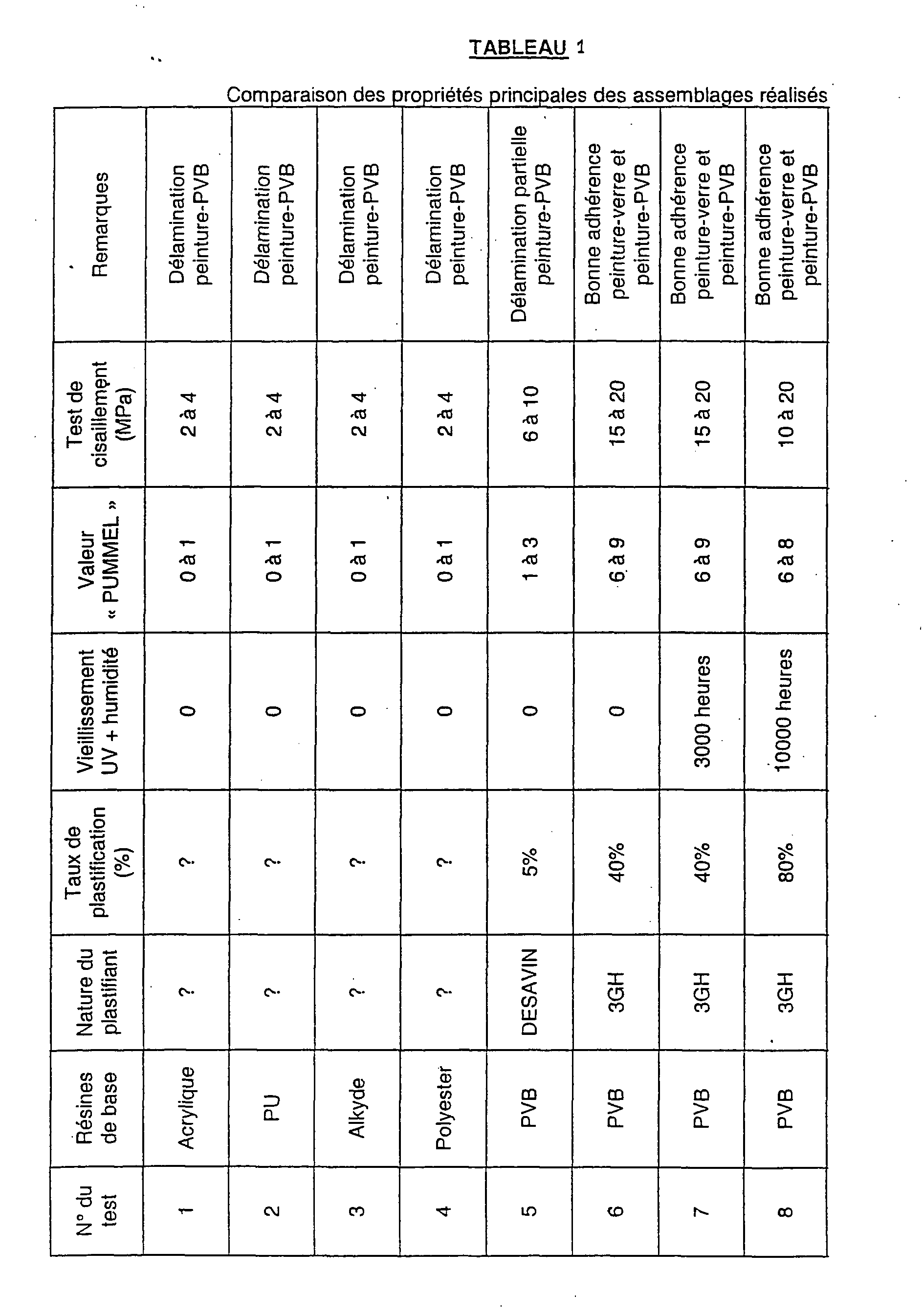

## Revendications

1. Procédé pour obtenir une bonne adhérence d'une couche de peinture sur un film intercalaire d'un vitrage feuilleté la peinture étant située entre le film intercalaire et une plaque de verre du vitrage,
**caractérisé en ce que** l'on utilise pour la peinture un plastifiant de la même famille que celui de la couche intercalaire.

2. Procédé selon la revendication 1,
**caractérisé en ce que** l'on utilise un plastifiant identique à celui de la couche intercalaire.

3. Procédé selon une des revendications 1 ou 2, **caractérisé en ce que** le plastifiant utilisé est le (bis 2 éthylhexanate) triéthylèneglycol.

4. Procédé selon une des revendications 1 à 3, **caractérisé en ce que** l'on utilise une peinture basée sur une résine de la même famille que celle sur laquelle est basé le film intercalaire.

5. Procédé selon une des revendications 1 à 3, **caractérisé en ce que** l'on utilise une peinture basée sur la même résine que le film intercalaire.

6. Procédé selon une des revendications 1 à 5, **caractérisé en ce que** l'on utilise une peinture à base d'acétals de-polyvinyle.

7. Procédé selon la revendication 6,
**caractérisé en ce que** l'acétal de polyvinyle est un butyral de polyvinyle.

8. Procédé selon la revendication 7,
**caractérisé en ce que** la teneur en groupements butyral de la résine utilisée dans la formulation de la peinture est compris entre 60 et 90%.

9. Procédé selon une des revendications précédentes, **caractérisé en ce que** l'on utilise un taux de plastification de la peinture compris entre 5 et 90% du poids de la peinture.

10. Procédé selon la revendication 9,
**caractérisé en ce que** l'on utilise un taux de plastification de la peinture compris entre 20 et 50% du poids de la peinture.

11. Procédé selon une des revendications précédentes, **caractérisé en ce que** l'on applique la peinture par pistolage, par sérigraphie, par enduction ou par jet d'encre.

12. Application du procédé selon une des revendications précédentes à la fabrication de vitrages laminés destinés à des pare-brise, vitres latérales ou de custode pour automobiles, ou à l'équipement de véhicules aéronautiques, ferroviaires ou nautiques.

13. Application du procédé selon une des revendications 1 à 11 à la fabrication de vitrages laminés pour bâtiments, en particulier de vitrages décoratifs.
